# EUROPÄISCHE PATENTSCHRIFT

(11) **EP 2 722 358 B1**
(45) Veröffentlichungstag und Bekanntmachung des Hinweises auf die Patenterteilung: **24.05.2017**
(21) Anmeldenummer: 12189259.0
(22) Anmeldetag: 19.10.2012
(51) Int. Cl.: C08K 3/30, C08J 3/00

(54) **Anhydritgefüllter Kunststoff**
Anhydrite filled plastic
Plastique rempli d'anhydrite

(43) Veröffentlichungstag der Anmeldung: 23.04.2014
(73) Patentinhaber: Knauf Gips KG, 97346 Iphofen (DE)
(72) Erfinder: Voigt, Wolfgang, 91593 Burgbernheim (DE)
(74) Vertreter: dompatent von Kreisler Selting Werner - Partnerschaft von Patent- und Rechtsanwälten mbB

(56) Entgegenhaltungen:
- WO-A1-2008/095874
- WO-A1-2009/009638

## Beschreibung

Gegenstand der Erfindung sind Füllstoffe für Kunststoffe und Kunststoffe, die Füllstoffe enthalten.

Die Verwendung von Füllstoffen in Kunststoffen ist weit verbreitet. Füllstoffe können dazu verwendet werden, Eigenschaften des Kunststoffes zu verändern oder auf gewünschte Zielwerte einzustellen. Sie können aber auch dazu dienen, teure organische Polymere durch preiswertere Stoffe zu ersetzen, um die Produktkosten zu senken.

Typische Füllstoffe zur Einstellung von Eigenschaften des Polymers sind beispielsweise Weichmacher oder Farbstoffe. Übliche Inhaltsstoffe, die wenig Einfluss auf die Eigenschaften haben, sind Calciumcarbonat und Talkum. Gebräuchliche weitere Inhaltsstoffe sind beispielsweise Glasfasern oder Kohlenstofffasern, Ruße, etc.

WO 2009/009638 beschreibt ein Material für ein Medizinprodukt, bei dem ein Polymer ein Mittel enthält, das Wasser absorbiert, beispielsweise wasserfreies Calciumsulfat.

WO 2008/095874 beschreibt ein Polylactid-basierendes Polymer, das Calciumsulfat enthalten kann und dadurch verbesserte Flammenschutzeigenschaften aufweist.

In einigen Fällen ist es üblich, die Füllstoffe direkt in den Kunststoff einzubringen, in anderen Fällen wird zunächst ein sogenannter Masterbatch erstellt, in dem Füllstoffe mit geringen Mengen eines Polymers vorgemischt werden und dann dieser Masterbatch in dem Kunststoff eingebracht wird.

Es werden häufig mehrere solcher Füllstoffe in Polymere eingebracht, um mehrere Eigenschaften zu verändern.

Obwohl zahlreiche Füllstoffe bekannt sind, besteht weiterhin Bedarf nach weiteren Füllstoffen, um Eigenschaften von Polymeren zu verändern oder um teure Kunststoffe durch preiswertere Füllstoffe zu ersetzen.

Aufgabe der vorliegenden Erfindung war es, hierfür geeignete Füllstoffe und gefüllte Kunststoffe bereit zu stellen.

Gelöst wird die Aufgabe durch eine Polymermatrix enthaltend 10 bis 70 Gew.-% natürlichen, mineralischen Anhydrit, wobei das Polymer ein Polyolefin ist und die Korngröße des Anhydrits, gemessen als d97, weniger als 10 µm beträgt.

Anhydrit ist chemisch gesehen Calciumsulfat (CaSO₄), dass aber - im Gegensatz zu Gips - kein Wasser gebunden hat. Anhydrit kann in reiner Form durchsichtig und farblos sein. Er kommt aber häufig aufgrund von Kristallfehlern in einer eher weißen bis grauen Form vor.

Anhydrit kommt an vielen Orten als Mineral natürlich vor. Es ist grundsätzlich möglich, Anhydrit auch durch Entwässerung von Gips zu erhalten.

Erfindungsgemäß wird als Polymer Polyolefin eingesetzt.

Besonders bevorzugte Polyolefine sind wie Polypropylen, insbesondere Polypropylen hoher Dichte, Polyethylen sowie Mischungen und Copolymere davon.

Copolymere - wie es in dieser Anmeldung verwendet wird - umfasst sowohl Formen, in denen Monomere miteinander polymerisiert werden als auch Formen, in denen Prepolymere mit Monomeren oder anderen Prepolymeren zusammen polymerisiert werden. Auch Polymerisationsreaktionen, in denen mehr als zwei Reaktionspartner beteiligt sind, sollen hiervon umfasst sein. Solche werden beispielsweise auch als Terpolymere bezeichnet.

Anhydrit ist ein Mineral, das bei dauerhaftem Kontakt mit Wasser in Gips umgewandelt wird. Dies ist erfindungsgemäß wenig wünschenswert, da es während des Spritz- und Formprozesses zu Ausgasungen und damit Blasen im Fertigprodukt kommt, daher wird bevorzugt, dass der Wassergehalt des Anhydrits < 1 Gew.-% ist.

Besonders geeignet ist die Verwendung eines Anhydrits, das eine Korngröße, gemessen als d50 < 10 µm ist.

Erfindungsgemäß ist die Korngröße kleiner, so dass der d97 Wert ≤ 10 µm wird.

In einigen Ausführungsformen ist es bevorzugt, dass die Korngröße 1 µm nicht unterschreitet. Bevorzugt liegt zumindest der d50 Wert oberhalb von 1 µm.

d50 ist die Körngröße, bei der 50 Gew.-% der Teilchen eine Korngröße oberhalb des Wertes und 50% unterhalb des Wertes haben. d97 ist der entsprechend Wert, bei dem 97 Gew.-% der Teilchen kleiner sind.

In einigen Ausführungsformen der Erfindung sind zusätzlich weitere anorganische Füllstoffe in einer Menge von 5 bis 50% enthalten.

Gegenstand der Erfindung ist auch ein Verfahren zur Herstellung einer Polymermatrix umfassend das Vermischen von Polymer und Anhydrit, wobei die Matrix im Ergebnis 10 bis 70 Gew.-% Anhydrit enthält und das Polymer ein Polyolefin ist und die Korngröße des Anhydrits, gemessen als d97, weniger als 10 µm beträgt. Dieses Vermischen kann besonders einfach in einem Extruder erfolgen.

Es zeigt sich, dass der Anhydrit als Füllstoff neben der Einsparung von Polymermatrix auch teilweise Eigenschaften verbessern kann, insbesondere die Schlagzähigkeit. Daher ist Gegenstand der Erfindung auch die Verwendung von natürlichem, mineralischem Anhydrit, wobei die Korngröße des Anhydrits, gemessen als d97, weniger als 10 µm beträgt, als Füllstoff in Polymermatrices zur Verbesserung der Schlagzähigkeit, wobei das Polymer ein Polyolefin ist. Die Menge an Anhydrit, die in einer Polymermatrix eingebettet wird, ist bevorzugt mindestens 20%, mehr bevorzugt mindestens 30%. Bevorzugt ist der Gehalt mindestens 60, bevorzugt mindestens 50%. In einigen Ausführungsformen kann der Gehalt im Bereich von 20 bis 50 Gew.-% liegen, in anderen zwischen 30 und 60 Gew.-%.

Der Gegenstand der Erfindung wird durch die nachfolgenden Beispiele näher erläutert.

### Beispiel 1

Zur Analyse wurden folgende Substanzen eingesetzt

### 1) Eingesetzte Materialien

| **Nr.** | **Materialbezeichnung** | **Materialtyp** | **Hersteller/Lieferant** | **Lieferform** |
|---|---|---|---|---|
| 1 | 505 P | Polypropylen | Sabic | Granulat |
| 2 | MG 9641 | Polyethylen hoher Dichte | Borealis | Granulat |
| 3 | Anhydrit 1 | Korngröße d50 < 10 µm | Knauf | Pulver |
| 4 | Anhydrit 2 | Korngröße d97 < 10 µm | Knauf | Pulver |
| 5 | Luzenac 8218 | Talkum | Imerys | Pulver |

Daraus wurden folgende Rezepturen hergestellt:

| **Rezepturanteile (%)** | **pp** | **PE-HD** | **PVC** | **Anhydrit 1** | **Anhydrit 2** | **Talkum** |
|---|---|---|---|---|---|---|
| Beispiel 1 (Vergleichsbeispiel) | 70 | | | 30 | | |
| Beispiel 2 | 70 | | | | 30 | |
| Beispiel 3 (Vergleichsbeispiel) | 70 | | | | | 30 |
| Beispiel 4 (Vergleichsbeispiel) | | 70 | | 30 | | |
| Beispiel 5 | | 70 | | | 30 | |
| Beispiel 6 (Vergleichsbeispiel) | | 70 | | | | 30 |
| Beispiel 7 (Vergleichsbeispiel) | | | 90 | 10 | | |
| Beispiel 8 (Vergleichsbeispiel) | | | 90 | | 10 | |
| Beispiel 9 (Vergleichsbeispiel) | | | 90 | | | 10 |

### 2) Compoundierung

Die Herstellung der Compounds auf Basis PP und PE-HD erfolgte auf einem gleichsinnig drehenden dichtkämmenden Doppelschneckenextruder vom Typ ZSK 26 Mcc der Fa. Coperion. Die Polymere wurden über den Haupteinzug dosiert. Die Zugabe der Füllstoffe erfolgte über eine Seitenbeschickung in Gehäuse 4. In Gehäuse 4 wurde atmosphärisch entgast. In Gehäuse 11 wurde eine Vakuumentgasung installiert. Alle Komponenten wurden gravimetrisch dosiert. Die Gehäusetemperaturen betrugen durchgängig 220°C (PP) bzw. 200°C (PE-HD). Die Restfeuchte des Anhydrit 1 lag bei 0,14%, die des Anhydrit 2 betrug 0,29% und die des Talkum 0,20%. Die Feuchte wurde bei 130°C/40 min über eine Gewichtsverlustmessung bestimmt.

In der nachfolgenden Tabelle sind die verwendeten Verfahrensparameter sowie die resultierenden Prozessgrößen aufgeführt.

| **Verfahrensparameter und Prozessgrößen** | **Beispiel 1 (Vergleichsbeispiel)** | **Beispiel 2** | **Beispiel 3 (Vergleichsbeispiel)** | **Beispiel4 (Vergleichsbeispiel)** | **Beispiel 5** | **Beispiel 6 (Vergleichsbeispiel)** |
|---|---|---|---|---|---|---|
| Drehzahl (1/min) | 300 | 300 | 300 | 300 | 300 | 300 |
| Durchsatz (kg/h) | 15 | 15 | 15 | 15 | 15 | 15 |
| Massetemperatur (V) | 230 | 231 | 229 | 205 | 206 | 202 |
| Massedruck (bar) | 13 | 14 | 14 | 15 | 14 | 13 |
| Drehmoment (%) | 48 | 47 | 48 | 42 | 42 | 40 |

### 3) Extrusion

Die Einarbeitung in PVC erfolgte im ersten Schritt durch die Herstellung von DryBlends in einem Container-Mischer (CM80, Mixaco). Dabei wurde das Mischgut über die Friktionswärme bei einer Drehzahl von 800 min⁻¹ bis auf eine Temperatur von 110°C erwärmt. Der Kühlprozess wurde nach Erreichen der Temperaturspitze von 110°C automatisch eingeleitet und das Mischgut über den Containermantel auf eine Temperatur von 40°C gekühlt.

In einem zweiten Schritt wurden aus den Dry-Blends mit einem gegenlaufenden Doppelschneckenextruder vom Typ DS 7.22 der Fa. Weber Maschinenfabrik Profile mit Kastengeometrie ((100x50x4) mm³) hergestellt. Der Extrusionsprozess wurde aus vollem Trichter bei einer Drehzahl von 12 min⁻¹ durchgeführt. Das verwendete Temperaturprofil ist in der folgenden Tabelle dargestellt.

| | **T₁** | **T₂** | **T₃** | **T₄** | **T₅** | **T₆** | **T₇** | **T₈** | **T₉** | **T₁₀** | **T₁₁** |
|---|---|---|---|---|---|---|---|---|---|---|---|
| T (°C) | 185 | 185 | 180 | 180 | 180 | 180 | 180 | 190 | 190 | 190 | 190 |

T₁ bis T₅ bezeichnen die Temperaturen des Zylinders stromabwärts, T₆ und T₇ die Temperaturen im Adapterflansch und T₈ bis T₁₁ die Temperaturen im Werkzeug (oben, unten, rechts und links).

Nach dem Werkzeugaustritt wurden die Profile zunächst in einer Vakuum-Trocken- Kalibrierung kalibriert, im Wasserbad abgekühlt und im Anschluss auf Stücke von 1 m Länge getrennt.

Die Temperatur sowie der Druck in der Schmelze wurden an der Schneckenspitze gemessen. Die resultierenden Prozessgrößen sind in der folgenden Tabelle zusammengefasst.

| | **Beispiel 7 (Vergleichsbeispiel)** | **Beispiel 8 (Vergleichsbeispiel)** | **Beispiel 9 (Vergleichsbeispiel)** |
|---|---|---|---|
| Temperatur (°C) | 183 | 183 | 186 |
| Druck (bar) | 193 | 196 | 204 |
| Drehmoment (%) | 40 | 39 | 45 |

### 4) Probekörperherstellung

Aus den PP- und PE-Compounds wurden die Probekörper für den Zug- und Schlagversuch im Spritzgießverfahren hergestellt.

Aus den PVC-Profilen wurden die Prüfkörper für die Zug- und Schlagprüfung herausgefräst. Die Schlagproben (80x10x4 mm³) wurden mit einer Kerbe der Kerbart A versehen.

Die Schmelze-Massefließrate sowie die Dichte wurden an den spritzgegossenen bzw. aus den Profilen gefrästen Probekörpern ermittelt.

Zur Ermittlung der Wärmeleitfähigkeit wurden aus den Profilen Probekörper mit einem Durchmesser von 12,6 mm und einer Dicke von 2 mm herausgefräst. Die Probekörper wurden an die NETZSCH-Gerätebau GmbH zur Bestimmung der Wärmeleitfähigkeit mittels des Laser-Flash-Verfahrens verschickt.

Die Bestimmung der Wärmeformbeständigkeit wurde an Probekörpern der Geometrie (80x10x4) mm³ durchgeführt, die aus Zugstäben entnommen wurden.

### 5) Dispergiergüte

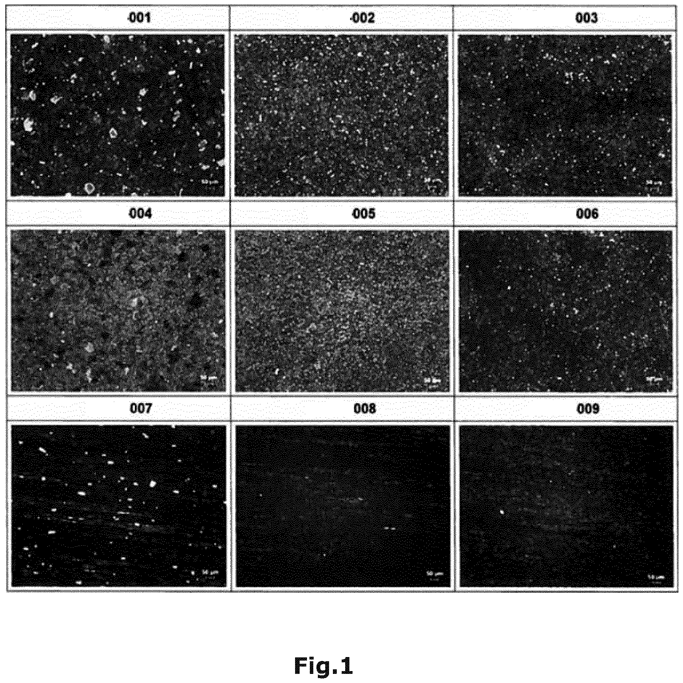

Zur Bewertung der Dispergiergüte wurden Dünnschnitte angefertigt und mikroskopisch analysiert. Die Ergebnisse sind in Figur 1 gezeigt.

Die Proben zeigen alle eine gute Dispergiergüte. Deutlich erkennbar ist der Unterschied in der Partikelgröße des Anhydrits 1 im Vergleich zum Anhydrit 2 und dem Talkum.

### 6) Schmelze-Massefließrate (Melt-Flow-Rate, MFR)

Die gemessenen MFR-Werte sind in der folgenden Tabelle dargestellt.

| | **Bsp. 1 (Vergleichsbeispiel)** | **Bsp. 2** | **Bsp. 3 (Vergleichsbeispiel)** | **Bsp. 4 (Vergleichsbeispiel)** | **Bsp. 5** | **Bsp. 6 (Vergleichsbeispiel)** | **Bsp. 7 (Vergleichsbeispiel)** | **Bsp. 8 (Vergleichsbeispiel)** | **Bsp. 9 (Vergleichsbeispiel)** |
|---|---|---|---|---|---|---|---|---|---|
| MFR (g/10min) | 5,9 ± 0,1 | 5,2± 0,2 | 4,4 ± 0,0 | 17,8 ± 0,1 | 18,4 ± 0,2 | 19,7 ± 0,2 | 0,8 ± 0,0 | 0,6 ± 0.0 | 0,4 ± 0,0 |

### 7) Mechanische Eigenschaften

Die mechanischen Eigenschaften wurden untersucht:

| | **Beispiel 1 (Vergleichsbeispiel)** | **Beispiel 2** | **Beispiel 3 (Vergleichsbeispiel)** | **Beispiel 4 (Vergleichsbeispiel)** | **Beispiel 5** | **Beispiel 6 (Vergleichsbeispiel)** | **Beispiel 7 (Vergleichsbeispiel)** | **Beispiel 8 (Vergleichsbeispiel)** | **Beispiel 9 (Vergleichsbeispiel)** |
|---|---|---|---|---|---|---|---|---|---|
| Charpy-(Kerb)-Schlagzähigkeit (kJ/m²) | 26 ± 1 | 40 ± 6 | 38 ± 1 | 24 ± 2 | s. Text | 29 ±1 | 10 ± 1 | 18 ± 2 | 9 ± 0 |
| Zugfestigkeit (MPa) | 27,2 ±0,1 | 29,1 ± 0,1 | 36,5 ± 0,1 | 23,0 ± 0,0 | 25,2 ± 0,1 | 30,4 ± 0,1 | 41,3 ± 0,2 | 41,5 ± 0,4 | 48,6 ± 0,2 |
| Zug-E-Modul (MPa) | 2117 ±29 | 2225 ±27 | 3798 ±14 | 1707 ±28 | 1692 ±14 | 2722 ±28 | 2856 ±36 | 2799 ±32 | 3727 ±102 |
| Dehnung bei Streckgrenze (%) | 5,3 ±0,1 | 4.0 ±0,1 | 3,9 ±0,1 | 5,3 ±0,0 | 4,0 ±0,0 | 4,1 ±0,0 | 4,0 ±0,1 | 3,9 ±0,0 | 3,4 ±0,1 |

Bei den Beispiel 1 bis 4 und 6 bis 9 trat ausschließlich Bruchart C (vollständiger Bruch) auf. Bei Probe 5 wurden sowohl vollständige (C) als auch teilweise Brüche (P) beobachtet. Daraus ergeben sich Schlagzähigkeiten von
- 69 ± 18 kJ/m² für Bruchart C (vollständiger Bruch) bei sechs Probekörpern
- 140 ± 17 kJ/m² für Bruchart P (teilweiser Bruch) bei vier Probekörpern.

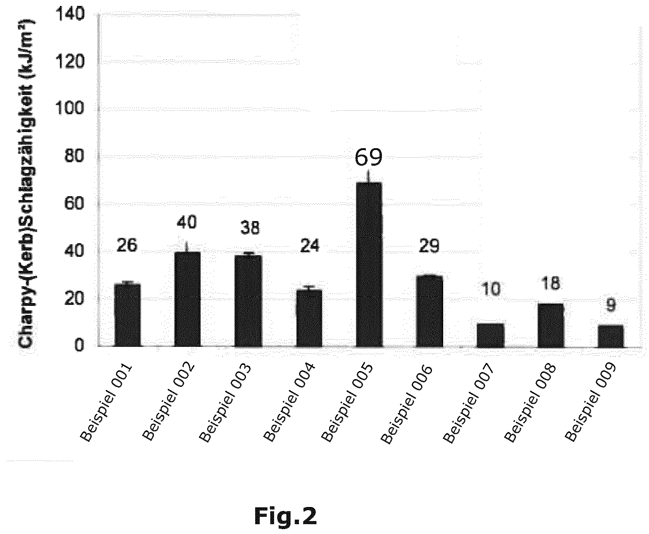

Die Ergebnisse der Kerbschlagzähigkeit sind auch in Figur 2 dargestellt.

### 8) Füllstoffanteil

Zur Kontrolle der Füllung wurde die Füllgrade durch Veraschung nach DIN EN ISO 3451-2 ermittelt. Die Werte sind in guter Übereinstimmung mit den Vorgaben:

| | **1 (Vergleichsbeispiel)** | **2** | **3 (Vergleichsbeispiel)** | **4 (Vergleichsbeispiel)** | **5** | **6 (Vergleichsbeispiel)** |
|---|---|---|---|---|---|---|
| Glührückstand (Gew.-%) | 29,97 ± 0,02 | 29,47 ± 0,05 | 29,42 ± 0,03 | 29,92 ± 0,01 | 28,69 ± 0,13 | 29,03 ± 0,00 |

## Patentansprüche

1. Polymermatrix enthaltend 10 bis 70 Gew.-% natürlichen, mineralischen Anhydrit, wobei das Polymer ein Polyolefin ist und die Korngröße des Anhydrits, gemessen als d97, weniger als 10 µm beträgt.

2. Polymermatrix nach Anspruch 1, **dadurch gekennzeichnet, dass** das Polymer ausgewählt wird aus Polypropylen, insbesondere Polypropylen hoher Dichte, Polyethylen, Polyvinylchloride sowie Mischungen und Copolymeren davon.

3. Polymermatrix nach einem der Ansprüche 1 bis 2, **dadurch gekennzeichnet, dass** das Polymer aus Polyethylen, Polypropylen, Polybuten Homooder Copolymeren ausgewählt wird.

4. Polymermatrix nach einem der Ansprüche 1 bis 3, **dadurch gekennzeichnet, dass** der Wassergehalt des Anhydrits < 1 Gew.-% ist.

5. Polymermatrix nach einem der Ansprüche 1 bis 4, **dadurch gekennzeichnet, dass** zusätzlich weitere anorganische Füllstoffe in einer Menge von 5 bis 50% enthalten sind.

6. Verfahren zur Herstellung einer Polymermatrix umfassend das Vermischen von Polymer und Anhydrit, wobei die Matrix 10 bis 70 Gew.-% natürlichen, mineralischen Anhydrit enthält und das Polymer ein Polyolefin ist und die Korngröße des Anhydrits, gemessen als d97, weniger als 10 µm beträgt.

7. Verfahren nach Anspruch 6, **dadurch gekennzeichnet, dass** die Vermischung in einem Extruder erfolgt.

8. Verwendung von natürlichem, mineralischem Anhydrit, wobei die Korngröße des Anhydrits, gemessen als d97, weniger als 10 µm beträgt, als Füllstoff in Polymermatrices zur Verbesserung der Schlagzähigkeit, wobei das Polymer ein Polyolefin ist.

## Claims

1. A polymer matrix comprising from 10 to 70% by weight of natural mineral anhydrite, wherein said polymer is a polyolefin and the grain size of the anhydrite measured as D97 is less than 10 µm.

2. The polymer matrix according to claim 1, **characterized in that** said polymer is selected from polypropylene, especially high density polypropylene, polyethylene, polyvinyl chlorides, and mixtures and copolymers thereof.

3. The polymer matrix according to either of claims 1 to 2, **characterized in that** said polymer is selected from polyethylene, polypropylene, polybutene homo- or copolymers.

4. The polymer matrix according to any of claims 1 to 3, **characterized in that** the water content of the anhydrite is < 1% by weight.

5. The polymer matrix according to any of claims 1 to 4, **characterized in that** further inorganic fillers are additionally comprised in an amount of 5 to 50%.

6. A process for preparing a polymer matrix, comprising the mixing of a polymer and anhydrite, wherein said matrix contains from 10 to 70% by weight of natural mineral anhydrite, and said polymer is a polyolefin and the grain size of the anhydrite measured as D97 is less than 10 µm.

7. The process according to claim 6, **characterized in that** said mixing is effected in an extruder.

8. Use of natural mineral anhydrite, wherein the grain size of said anhydrite measured as D97 is less than 10 µm, as a filler in polymer matrices for improving the impact resistance, wherein said polymer is a polyolefin.

## Revendications

1. Matrice de polymère contenant 10 à 70 % en poids d'anhydrite minéral, naturel, où le polymère est une polyoléfine et la granulométrie de l'anhydrite, mesurée comme étant sous la forme d97, est inférieure à 10 µm.

2. Matrice de polymère selon la revendication 1, **caractérisée en ce que** le polymère est sélectionné à partir de polypropylène, en particulier de polypropylène à forte densité, de polyéthylène, de chlorures de polyvinyles, ainsi que de mélanges et de copolymères de ces matériaux.

3. Matrice de polymère selon l'une des revendications 1 à 2, **caractérisée en ce que** le polymère est sélectionné à partir de polyéthylène, de polypropylène, de polybutène, d'homopolymères ou de copolymères.

4. Matrice de polymère selon l'une des revendications 1 à 3, **caractérisée en ce que** la teneur en eau de l'anhydrite est inférieure à 1 % en poids.

5. Matrice de polymère selon l'une des revendications 1 à 4, **caractérisée en ce que** d'autres matières de charge anorganiques sont en outre contenues dans une quantité comprise entre 5 et 50 %.

6. Procédé destiné à la fabrication d'une matrice de polymère comprenant le mélange de polymère et d'anhydrite, où la matrice contient 10 à 70 % en poids d'anhydrite minéral, naturel, où le polymère est une polyoléfine et où la granulométrie de l'anhydrite, mesurée comme étant sous la forme d97, est inférieure à 10 µm.

7. Procédé selon la revendication 6, **caractérisée en ce que** le mélange est réalisé dans une extrudeuse.

8. Utilisation d'anhydrite minéral, naturel, où la granulométrie de l'anhydrite, mesurée comme étant sous la forme d97, est inférieure à 10 µm, ledit anhydrite minéral, naturel servant de matière de charge dans des matrices de polymère en vue de l'amélioration de la résistance aux chocs, le polymère étant une polyoléfine.
